# EUROPÄISCHE PATENTSCHRIFT

(11) **EP 1 543 373 B1**
(45) Veröffentlichungstag und Bekanntmachung des Hinweises auf die Patenterteilung: **28.06.2006**
(21) Anmeldenummer: 03785604.4
(22) Anmeldetag: 22.09.2003
(51) Int. Cl.: G02B 27/48

(54) **BELEUCHTUNGSVORRICHTUNG MIT VORRICHTUNG ZUR VERMINDERUNG DER KOHÄRENZ EINES LICHTBÜNDELS**
LIGHTING DEVICE
DISPOSITIF D'ECLAIRAGE

(30) Priorität: 27.09.2002 DE 10245102
(43) Veröffentlichungstag der Anmeldung: 22.06.2005
(73) Patentinhaber: Carl Zeiss SMS GmbH, 07745 Jena (DE)
(72) Erfinder: BISCHOFF, Jörg, 98693 Ilmenau (DE); BRUNNER, Robert, 07743 Jena (DE); BURKHARDT, Matthias, 07768 Eichenberg (DE); ERDMANN, Lars, 99880 Hörselgau (DE); STEINER, Reinhard, 07646 Stadtroda (DE)
(74) Vertreter: Geyer, Fehners & Partner
(86) Internationale Anmeldenummer: PCT/EP2003/010538
(87) Internationale Veröffentlichungsnummer: WO 2004/029689

(56) Entgegenhaltungen:
- WO-A-01/57581
- US-A- 3 844 638
- US-A- 5 005 969
- US-A- 5 048 926
- US-A- 5 463 497
- US-A- 6 069 739
- US-B1- 6 191 887

## Beschreibung

Die Erfindung bezieht sich auf eine. Beleuchtungsvorrichtung, bei der mittels eines zugeführten kohärenten Strahls und einer Mikrooptik, die eine Vielzahl von rasterartig angeordneten Optikelementen umfaßt, ein Objektfeld beleuchtet werden kann.

Für eine möglichst gleichmäßige Ausleuchtung des Objektfelds ist es vorteilhaft, daß die Mikrooptik möglichst viele Optikelemente aufweist. Wenn der Abstand von benachbarten Optikelementen jedoch kleiner als die laterale Kohärenzlänge des kohärenten Strahls ist, führt dies nachteilig zu unerwünschten Interferenzerscheinungen im Objektfeld, so daß schon aus diesem Grund die Anzahl der Optikelemente nicht beliebig erhöht werden kann, um eine gleichmäßigere Ausleuchtung zu erzielen.

Vorrichtungen zur gleichmäßigen Ausleutung eines Feldes sind aus US 6 191 887 B1 und aus US 5 463 497 bekannt.

Ausgehend hiervon ist es Aufgabe der Erfindung, eine Beleuchtungsvorrichtung bereitzustellen, mit der eine möglichst gleichmäßige Beleuchtung eines Objektfelds und gleichzeitig eine möglichst vollständige Unterdrückung von unerwünschten Interferenzeffekten im Objektfeld ermöglicht wird.

Die Aufgabe wird durch eine Beleuchtungsvorrichtung mit den Merkmalen des Anspruchs 1 gelöst.

Somit geht von jedem Opfikälement im Unterschied zu bisher bekannten Lösungen nicht nur ein Beleuchtungsteilstrahl, sondern mehrere Beleuchtungsteilstrahlen mit unterschiedlichen Ausbreitungsrichtungen aus, wodurch eine gleichmäßigere Objektfeldbeleuchtung erzielt werden kann. Da von einem Optikelement mehrere Beleuchtungsteilstrahlen ausgehen, kann die Mikrooptik auch weniger Optikelemente mit größerem Abstand untereinander aufweisen im Vergleich zu herkömmlichen Beleuchtungsvorrichtungen, so daß, wenn der Abstand entsprechend der lateralen Kohärenzlänge des kohärenten Strahls eingestellt ist, keine oder fast keine Interferenzeffekte im Objektfeld mehr auftreten.

Unter einem kohärenten Strahl wird ein Strahl verstanden, der eine endliche zeitliche Kohärenzlänge aufweist und der räumlich bzw. lateral (also im Strahlquerschnitt) teilweise oder vorkommen kohärent ist.

Die Strahlvervielfachungseinrichtung der Beleuchtungsvorrichtung enthält ein erstes Modul, das einen ersten Strahlteiler sowie einen ersten und einen zweiten Modularm mit jeweils einem (bevorzugt ebenen) Endspiegel aufweist, wobei der auf den Strahlteiler treffende Strahl in einen ersten Teilstrahl, der in den ersten Modulstrahl eingekoppelt wird, und in einen zweiten Teilstrahl aufgeteilt wird, der in den zweiten Modularm eingekoppelt wird, wobei zumindest Teile der von den Endspiegeln zum Strahlteiler zurückreflektierten Teilstrahlen mittels dem ersten Strahlteiler zu einem Strahlenbündel mit divergierenden Teilstrahlen zusammengeführt werden, wobei zumindest einer der beiden Endspiegel eine ebene Spiegelfläche aufweist, die so angeordnet ist, daß der Einfallswinkel des entsprechenden Teilstrahls ungleich 0° ist. Bevorzugt schließen beide Modularme einen Winkel von 90° ein.

Das erste Modul ist somit im wesentlichen ein hinsichtlich der optischen Längen in beiden Mödularmen verstimmtes Michelson-Interferometer, so daß bei der Zusammenführung der zurückreflektierten Teilstrahlen Interferenzen zwischen den zusammengeführten Teilstrahlen vermindert und gegebenenfatls auch vollständig unterdrückt werden können. Ferner ist zumindest einer der Endspiegel etwas verkippt, so daß der einfallende und züruckreftektierte Teitstrahl im entsprechenden Modularm nicht den identischen Weg durchlaufen, sondern miteinander einen Winkel von ungleich 0° einschließen. Damit wird in einfachster Art und Weise ermöglicht, daß das mittels dem ersten Strahlteiler vereinigte Strahlenbündel zwei divergierende Strahlen enthält.

Insbesondere können sich beim ersten Modul die optischen Längen der beiden Modularme um zumindest die halbe zeitliche Kohärenzlänge des zugeführten Strahls unterscheiden. Damit wird sichergestellt, daß bei der Zusammenführung der zurückreflektierten Teilstrahlen unerwünschte Interferenzeffekte (die beispielsweise im Objektfeld sichtbar wären) vollständig verhindert werden.

Unter der zeitlichen Kohärenzlänge wird hier die Kohärenzlänge in Ausbreitungsrichtung des Strahls verstanden (bzw. ein Minimum, bevorzugt das erste Minimum der zeitlichen Kohärenzfunktion). Da beide Modularme durch die entsprechenden Teilstrahlen jeweils zweimal durchlaufen werden, sind bei einem Unterschied der optischen Längen von mindestens der halben zeitlichen Kohärenzlänge die Teilstrahlen bei der Überlagerung nicht mehr miteinander interferenzfähig.

Weil das erste Modul wie ein verstimmtes Michelson-Interferometer aufgebaut ist, kann der Unterschied der optischen Längen leicht auf zumindest die halbe zeitliche Kohärenzlänge eingestellt werden. Dies ist insbesondere auch bei sogenannter partiell kohärenter Strahlung möglich, wie sie insbesondere von Multimode-Läsern (z.B. Excimer-Lasern) abgegeben wird, da das partiell kohärente Strahlenbündel eine relativ geringe zeitliche Kohärenzlänge aufweist. So gibt beispielsweise ein Argon-Fluorid-Excimer-Laser einen Strahl mit einer Wellenlänge von 193 nm und einer zeitlichen Kohärenzlänge von ca. 100 µm ab. Aber auch größere zeitliche Kohärenzlängen können leicht durch Veränderung bzw. Einstellung der Modularmlängen so kompensiert werden, daß die durch den Strahlteiler überlagerten Teile nicht mehr interferenzfähig sind.

In einer bevorzugten Weiterbildung der erfindungsgemäßen Beleuchtungsvorrichtung umfaßt die Strahlvervielfachungseinrichtung zumindest ein zweites Modul mit einem zweiten Strahlteiler sowie einem dritten und vierten Modularm mit jeweils einem Endspiegel, wobei die vom ersten Strahlteiler zusammengeführten Teilstrahlen auf den zweiten Strahlteiler treffen und von diesem in ein drittes Teilstrahlenbündel, das in den dritten Modularm eingekoppelt wird, und ein viertes Teilstrahlenbündel aufgeteilt werden, das in den vierten Modularm eingekoppelt wird, wobei zumindest Teile der von den Endspiegeln des dritten und vierten Modularms zum zweiten Strahlteiler zurückreflektierten dritten und vierten Teilstrahlenbündel mittels dem zweiten Strahlteiler zum Strahlenbündel vereinigt werden, das auf die Mikrooptik trifft, wobei zumindest einer der beiden Endspiegel des dritten und vierten Modularms eine ebene Spiegelfläche aufweist, die so angeordnet ist, daß der Einfallswinkel jedes der Teilstrahlen des Teilstrahlenbündels des entsprechenden Modularms ungleich 0° ist.

Durch das zweite Modul wird eine Verdoppelung der Anzahl der divergierenden Teilstrahlen in dem Strahlenbündel, das auf die Mikrooptik trifft, erreicht, wodurch die gleichmäßige Beleuchtung des Objektfelds verbessert werden kann.

Insbesondere können sich die optischen Weglängen des dritten und vierten Modularms um mindestens die halbe zeitliche Kohärenzlänge des zugeführten Strahls unterscheiden, so daß auch zwischen den von den Endspiegeln des dritten und vierten Modularms zurückreflektierten und mittels dem zweiten Strahlteiler zusammengeführten Teilstrahlenbündeln keine unerwünschten Interferenzen auftreten.

Natürlich muß das von dem zweiten Modul kommende divergierende Strahlenbündel nicht direkt auf die Mikrooptik gerichtet werden. Sondern es können z.B. noch weitere zweite Module einzeln nacheinander geschaltet werden, so daß mit jedem weiteren zweiten Modul eine Verdopplung der Anzahl der Teilstrahlen im Strahlenbündel erfolgt, das schließlich auf die Mikrooptik trifft. Diese weiteren zweiten Module sind bevorzugt so wie das bereits beschriebene zweite Modul ausgebildet.

Die Module können so ausgebildet sein, daß die Modularme des ersten und zweiten Moduls in einer Ebene oder in zwei verschiedenen Ebenen liegen. Dadurch kann leicht eine kompakte, an die restlichen Elemente der Beleuchtungsvorrichtung angepaßte Anordnung des Moduls bzw. deren Arme erfolgen.

Die Ausgestaltung der erfindungsgemäßen Beleuchtungsvorrichtung besteht darin, daß das erste Modul zwei Prismen umfaßt, wobei ein erstes der beiden Prismen mit seiner ersten Seite an einer ersten Seite des zweiten Prismas anliegt und zwischen den beiden Seiten eine den ersten Strahlteiler bildende Strahlteilerschicht angeordnet ist, und wobei der erste Modularm im ersten Prisma und der zweite Modularm im zweiten Prisma liegt. Damit wird eine einfache technische Realisierung des ersten Moduls bereitgestellt. Es müssen nur aus der Optik bekannte und leicht handhabbare Grundelemente (wie Prismen und Strahlteilerschichten) geeignet kombiniert werden. Insbesondere werden die Endspiegel der beiden Modularme durch Verspiegelung der entsprechenden Prismenseiten verwirklicht. Auch eine geeignete Ausrichtung der Prismenseiten so, daß eine innere Totalreflexion stattfindet, kann eingesetzt werden.

Daneben ist ein drittes Prisma vorgesehen, das mit seiner ersten Seite an der ersten Seite des ersten Prismas anliegt, wobei die erste Strahlteilerschicht dazwischen vorgesehen ist, und wobei das dritte Prisma mit seiner zweiten Seite an einer zweiten Seite des zweiten Prismas anliegt, wobei dazwischen eine zweite Strahlteilerschicht angeordnet ist. Mit einer solchen Ausbildung können drei hintereinandergeschaltete, verstimmte Michelson-Interferometer in kompakter Art und Weise realisiert werden, so daß, bei entsprechender Ausrichtung der reflektierenden Prismenseiten, aus einem einfallenden Strahl ein Strahlenbündel mit acht divergierenden Teilstrahlen erzeugt werden kann.

Insbesondere kann die Mikrooptik lauter gleiche Optikelemente aufweisen und beispielsweise als Mikrolinsenarray ausgebildet sein. Mit einer solchen Mikrooptik, die auch Multiaperturoptik genannt wird, und einer entsprechenden nachgeordneten Beleuchtungsoptik kann eine sehr gute Mikroskopbeleuchtung realisiert werden, da in der Pupillenebene eine quasi kontinuierliche Ausleuchtung vorliegt.

Ferner kann bei der erfindungsgemäßen Beleuchtungsvorrichtung der Abstand von benachbarten Optikelementen der Mikrooptik mindestens so groß sein wie die laterale Kohärenzlänge (Kohärenzlänge im Strahlenquerschnitt) des zugeführten Strahls. Damit wird eine Interferenz von von benachbarten Optikelementen ausgehenden Beleuchtungsteilstrahlen so gut wie vollständig verhindert.

Die erfindungsgemäße Beleüchtungsvörrichtung kann überall dort eingesetzt werden, wo ein Objektfeld bzw. Feld möglichst homogen ausgeleuchtet werden soll. Dies kann beispielsweise in der Mikroskopie, bei Steppern in der Halbleiterfertigung oder auch bei der Materialbearbeitung der Fall sein. Als Strahlungsquelle, die den kohärenten oder partiell kohärenten Strahl abgibt, können Laser, wie z.B. Excimer-Laser (beispielsweise Krypton-Fluorid-, Argon-Fluorid- oder Fluorid-Excimer-Läser), verwendet werden.

Die Erfindung wird nachfolgend beispielshalber anhand der Zeichnungen noch näher erläutert. Es zeigen:
- Fig. 1: eine schematische Ansicht einer Ausführungsform zur Erläuterung der erfindungsgemäßen Beleuchtungsvorrichtung;
- Fig. 2: ein Mikrolinsenarray in Draufsicht;
- Fig.3: eine schematische Ansicht einer Ausführungsform einer Strahlvervielfachungseinrichtung, und
- Fig. 4: eine Ausführungsform einer Strahlvervielfachungseinrichtung der erfindungsgemäßen Beleuchtungs vorrichtung.

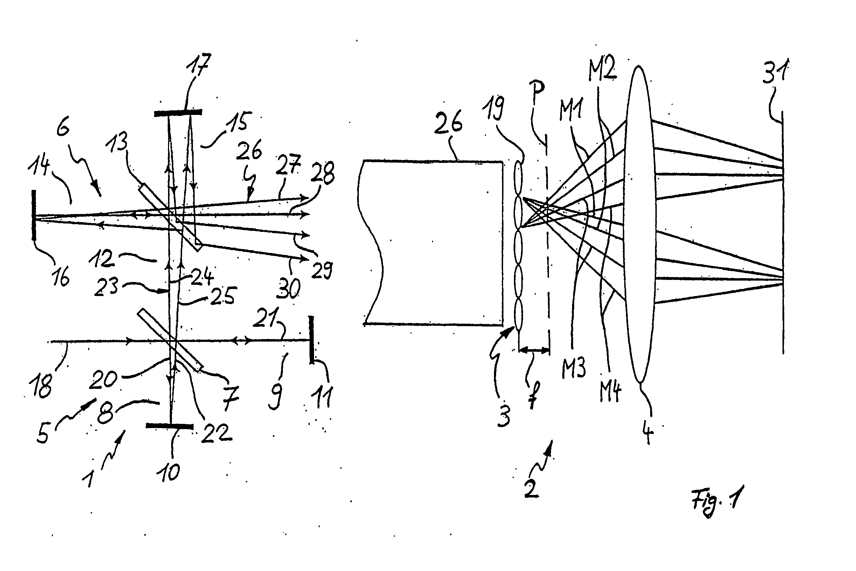

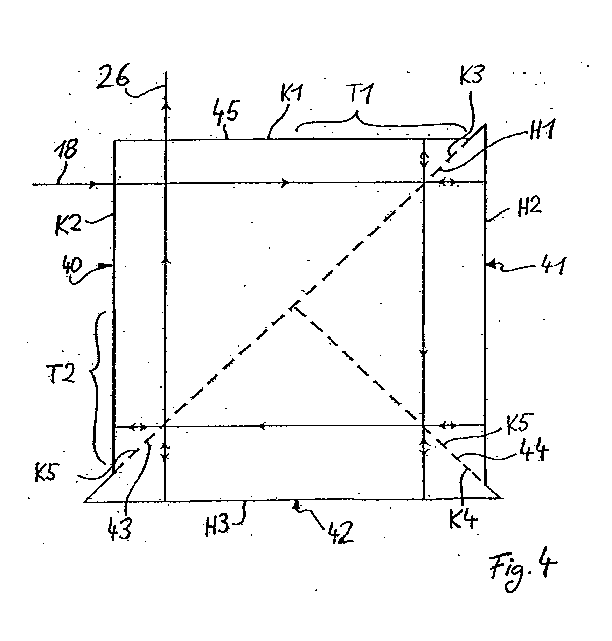

Die erfindungsgemäße Beleuchtungsvorrichtuhg gemäß einer ersten Ausführungsform umfaßt eine in Fig. 4 gezeigte Strahlvervielfachungseinrichtung sowie eine dieser nachgeordnete Beleuchtungsptik 2 mit einem Mikrolinsenarray 3 und einer Kondensoroptik 4 (Fig. 1).

Zur Erläuterung der Erfindung wird zunächst die Strahlvervielfachungseinrichtung 1, die in Fig. 1 eingezeichnet und nicht Teil des Erfindung ist, beschrieben. Sie umfaßt ein erstes und zweites Modul 5, 6, die im wesentlichen den gleichen Aufbau aufweisen. Das erste Modul 5 enthält einen ersten Strahlteiler 7, einen ersten und einen zweiten Modularm 8, 9 mit jeweils einem Endspiegel 10, 11 und ist über einen Verbindungsarm 12 mit dem zweiten Modul 6 verbunden, das einen zweiten Strahlteiler 13 sowie einen dritten und vierten Modularm 14, 15 mit jeweils einem Endspiegel 16, 17 aufweist

Die optischen Weglängen der beiden Modularme 8, 9 und 14, 15 der beiden Module 5, 6 sind jeweils so gewählt, daß sie sich um mindestens die halbe zeitliche Kohärenzlänge eines auf den ersten Strahlteiler 7 treffenden kohärenten bzw. teilkohärenten Strahls 18 unterscheiden. Ferner sind der Endspiegel 10 des ersten Modularms 8 und der Endspiegel 17 des vierten Modularms 15 so geneigt, daß die auf diese Endspiegel 10, 17 treffenden Teilstrahlen einen Einfallswinkel von ungleich 0° aufweisen.

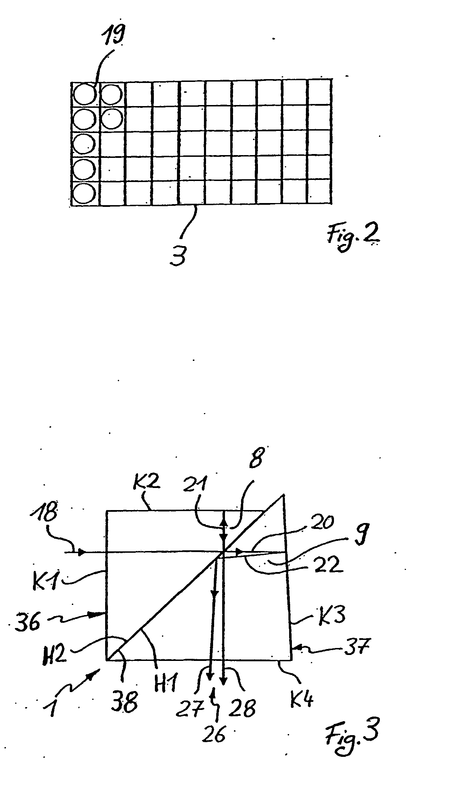

Das Mikrolinsenarray 3 weist eine Vielzahl von in einer Ebene liegenden Mikrolinsen 19 auf, wie dies in Fig. 2 schematisch dargestellt ist, wobei zur besseren Übersichtlichkeit der Darstellung des Mikrolinsenarray 3 mit fünf Zeilen und zehn Spalten gezeigt und nur einige der Mikrolinsen 19 eingezeichnet sind. Tatsächlich ist das Mikrolinsenarray bei der beschriebenen Ausführungsform ca. 3 x 6 mm groß und der Durchmesser der einzelnen Mikrolinsen 19 beträgt etwa 150 µm.

Wie aus Fig. 1 ersichtlich ist, trifft der kohärente oder ein partiell kohärenter Strahl 18 auf den ersten Strahlteiler 7, der um 45° gegenüber der Richtung des einfallenden Strahls geneigt ist und der den Strahl 18 in einen ersten Teilstrahl 20, der in den ersten Modularm 8 eingekoppelt wird, und einen zweiten Teilstrahl 21 aufteilt, der in den zweiten Modularm 9 eingekoppelt wird. Die beiden Teilstrahlen 20 und 21 werden an den Spiegeln 10 und 11 zum ersten Strahlteiler 7 zurückreflektiert, wobei der am Endspiegel 10 reflektierte Teilstrahl 22 mit dem einfallenden Teilstrahl 20 einen Winkel ungleich 0° einschließt, während der am Endspiegel 11 reflektierte Teilstrahl in sich zurückläuft und auf den ersten Strahlteiler 7 trifft. Von den Strahlen in der Strahlvervielfachungseinrichtung 1 sind in der schematischen Darstellung von Fig. 1 nur jeweils die Ausbreitungsrichtungen eingezeichnet. Natürlich weist jeder Strahl eine gewissen Strahlquerschnitt auf.

Der erste Strahlteiler 7 überlagert Teile der zurückreflektierten Teilstrahlen zu einem Strahlenbündel 23, das zwei Teilstrahlen 24 und 25 mit divergierenden Ausbreitungsrichtungen enthält, die auf den zweiten Strahlteiler 13 treffen. Das Strahlenbündel 23 wird am Strahlteiler 13 aufgeteilt und in den dritten und vierten Modularm 14 und 15 eingekoppelt und die eingekoppelten Strahlen werden an den Endspiegeln 16 und 17 zum zweiten Strahlteiler 13 zurückreflektiert und an diesem wiederum überlagert, so daß ein ausfallendes Strahlenbündel 26 erzeugt wird, das vier divergierende Teilstrahlen 27, 28, 29 und 30 enthält.

Aufgrund der unterschiedlichen optischen Weglängen im ersten und zweiten Modularm 8, 9 sowie im dritten und vierten Modularm 14 und 15 findet die Überlagerung an den Strahlteilern 7 und 13 der zurückreflektierten Strahlen ohne störende Interferenzerscheinungen statt. Die Strahlvervielfachungseinrichtung 13 entspricht daher im wesentlichen zwei hintereinandergeschalteten, verstimmten Michelson-Interferometem, wobei sowohl die Länge der einzelnen Arme als auch die Ausrichtung der Endspiegel verstimmt sind.

Das ausfallende Strahlenbündel 26 (nun als Strahlenbündel mit räumlicher Ausdehnung eingezeichnet) trifft nun auf das Mikrolinsenarray 3, wobei zur Verdeutlichung der weitere Strahlenverlauf nach dem Mikrolinsenarray 3 nur für eine der Mikrolinsen 19 des Mikrolinsenarrays 3 eingezeichnet ist. Für die anderen Mikrolinsen 19 ist der Strahlenverlauf entsprechend. Aufgrund der unterschiedlichen Ausbreitungsrichtungen der Teilstrahlen 27 bis 30 erzeugt die Mikrolinse vier Brennpunkte bzw. Foki in der Pupillenebene P. Anders gesagt, es gehen von jeder Mikrolinse vier Beleuchtungsteilstrahlenbündel M1, M2, M3, M4 aus, deren Brennpunkte (bzw. Orte mit geringstem Strahlquerschnitt) nicht aufeinander, sondern nebeneinander liegen (bevorzugt in einer Ebene). Dadurch wird eine gleichmäßigere Pupillenfüllung erreicht. Mittels der Kondensoroptik 4 wird dann das Objektfeld 31 beleuchtet.

In der Pupillenebene P, die zwischen dem Mikrolinsenarray 3 und der Linsenoptik 4 liegt (bevorzugt Brennebene der Mikrolinsen 19, Abstand Hauptebene der Mikrolinsen 19 zur Pupillenebene P entspricht Brennweite f der Mikrolinsen 19), kann noch, wie aus der Mikroskopie bekannt ist, eine verstellbare Blende (nicht gezeigt) vorgesehen sein, mit der die Helligkeit der Ausleuchtung im Objektfeld 31 und das Winkelspektrum der auf das Objektfeld 31 treffenden Strahlen einstellbar ist Aufgrund der gleichmäßigen Pupillenfüllung mit den vielen Brennpunkten (Anzahl der Mikrolinsen mal Anzahl der Teilstrahlen des Strahlenbündels 26) kann beispielsweise die Helligkeit sehr gleichmäßig durch Variation des Blendendurchmessers verändert werden (ohne Helligkeitssprünge).

Die Beleuchtungsoptik 2 ist somit ein sogenannter beugender Mikrolinsenhomogenisierer (bzw. beugender Multiaperturoptikhomogenisierer). In einer Abwandlung kann die Beleuchtungsoptik 2 auch als abbildender Mikrolinsenhomogenisierer (bzw. abbildender Multiaperturoptikhomogenisierer) ausgebildet sein, wobei in diesem Fall zwischen dem Mikrolinsenarray 3 und der Kondensoroptik 4 zumindest ein weiteres Mikrolinsenarray angeordnet ist. Dieses weitere Mikrolinsenarray umfaßt bevorzugt die gleiche Anzahl von Mikrolinsen wie das Mikrolinsenarray 3, wobei insbesondere eine 1 zu 1 Zuordnung zwischen den Mikrolinsen der beiden Mikrolinsenarrays vorliegt. Natürlich kann das weitere Mikrolinsenarray gleich wie das Mikrolinsenarray 3 ausgebildet sein.

In Fig. 3 ist eine kompakte Ausführungsform der Strahlvervielfachungseinrichtung 1, die nicht Teil der Erfindung ist, gezeigt, wobei diese nur ein einziges verstimmtes Michelson-Interferometer umfaßt. Die Strahlvervielfachungseinrichtung umfaßt ein 90°-Prisma 36 sowie ein weiteres Prisma 37. das kein 90°-Prisma ist. Beide Prismen sind so angeordnet, daß zwischen den beiden einander zugewandten Seiten H1 und H2 eine Strahlteilerschicht 38 vorgesehen werden kann, die als erster Strahlteiler wirkt.

Der einfallende Strahl 18 tritt durch eine ersten Kathetenseite K1 des ersten Prismas 36 hindurch, durchläuft das erste Prisma 36 und trifft auf die Strahlteilerschicht 38. Ein Teil des einfallenden Strahls 18 wird an der Strahlteilerschicht 38 reflektiert (in Fig. 3 nach oben) und der andere Teil wird transmittiert. Der reflektierte Teil wird an der zweiten Kathetenseite K2 des ersten Prismas 36, die verspiegelt ist, zur Strahlteilerschicht 38 zurückreflektiert. Der transmittierte Teil durchläuft das zweite Prisma 37 und wird an der entsprechenden Seite K3 des zweiten Prismas 37, die verspiegelt ist, zur Strahlteilerschicht 38 zurückreflektiert: Teile der zurückreflektierten Strahlen werden an der Stratilteilerschieht 38 zusammengeführt und durchlaufen das zweite Prisma 37 und treten an der dritten Seite K4 des zweiten Prismas 37 als ausfallendes Strahlenbündel 26 aus.

Der erste Modularm 8 liegt somit im ersten Prisma 36 und der zweite Modularm 9 liegt im zweiten Prisma 37. Die unterschiedlichen optischen Weglängen in den beiden Modularmen 8, 9 sind durch die unterschiedlichen Größen der beiden Prismen 36 und 37 eingestellt Da die zweite Seite K3 des zweiten Prismas 37 gegenüber dem einfallenden Teilstrahl einen Winkel von ungleich 90° einnimmt (somit ist der Einfallswinkel des Teilstrahls ungleich 0°), weist das ausfallende Strahlenbündel 26 zwei Teilstrahlen 27 und 28 auf. Die beiden Prismen sind bevorzugt Quarzprismen.

Es können mehrere der in Fig. 3 gezeigten Strahlvervielfachungseinrichtungen hintereinander geschattet werden, wobei jede Strahtvervielfachungseinrichtung eine Verdopplung der Teilstrahlen mit divergierenden Ausbreitungsrichtungen im ausfallenden Strählenbündel bewirkt.

In Fig. 4 ist eine erfindungsgemäße Ausführungsform der Strahlvervielfachungseinrichtung von Fig. 1 gezeigt, wobei in diesem Fall drei 90°-Prismen 40, 41 und 42 (bevorzugt Quarz-Prismen) vorgesehen sind, wodurch drei verstimmte Michelson-Interferometer, die hintereinandergeschaltet sind, verwirklicht sind. An der Hypotenusenseite H1 des ersten Prismas 40 liegen das zweite und dritte Prisma 41 und 42 jeweils mit einer ihrer Kathetenseiten K3, K5 an, wobei eine Strahlteilerschicht 43 dazwischen vorgesehen ist. Gleichzeitig liegt das zweite Prisma 41 mit seiner zweiten Kathetenseite K4 an der zweiten Kathetenseite K6 des dritten Prismas 42, wobei wiederum eine Strahlteilerschicht 44 dazwischen vorgesehen ist.

Die beiden Hypotenusenseiten H2, H3 des zweiten und dritten Prismas 41 und 42 sowie Teile T1, T2 der beiden Kathetenseiten K1, K2 des ersten Prismas 40 sind verspiegelt. Wie aus dem eingezeichneten Strahlverlauf zu entnehmen ist, finden drei Strahlteilungen statt, so daß das ausfallende Strahlenbündel 26 aus acht Teilstrahlen zusammengesetzt ist

Die Hypotenusenseiten H2 und H3 des zweiten und dritten Prismas 41, 42 weisen eine entsprechende Neigung (nicht eingezeichnet) zu den einfallenden Teilstrahlen auf, so daß durch diese Verkippung der beiden Hypotenusenseiten H2 und H3 acht Teilstrahlen mit divergierenden Ausbreitungsrichtungen (nicht dargestellt) in dem ausfallenden Strahlenbündel enthalten sind. Somit kann mit dieser sehr kompakten Prismenanordnung eine Verachtfachung des einfallenden Strahls realisiert werden, so daß von jeder Mikrolinse 19 (Fig. 1) nicht nur ein Beleuchtungsteilstrahl, sondern acht Beleuchtungsteilstrahlen ausgehen. Somit enthält das Mikrolinsenarray 3 scheinbar acht mal so viele Mikrolinsen 19 wie tatsächlich vorhanden sind.

Eine Weiterbildung der Strahlvervielfachungseinrichtung von Fig. 4 besteht darin, daß direkt auf der Ausgangsoberfläche 45 der ersten Kathetenseite K1 des ersten Prismas 40 das Mikrolinsenarray (nicht gezeigt) ausgebildet ist Dadurch wird eine Verkleinerung der erfindungsgemäßen Beleuchtungsvorrichtung vereinfacht.

## Patentansprüche

1. Beleuchtungsvorrichtung mit einer Strahlungsquelle und einer Strahlvervielfachungseinrichtung (1), die einen von der Strahlungsquelle zugeführten kohärenten Strahl (18) in mehrere Teilstrahlen (20, 21) aufteilt und diese nach Durchlaufen von Wegen mit unterschiedlichen optischen Längen zu einem Strahlenbündel (26) zusammenführt, in dem die Teilstrahlen (27, 28, 29, 30) divergieren, und ferner mit einer der Strahlvervielfachungseinrichtung (1) nachgeordneten Mikrooptik (3), die eine Vielzahl von rasterartig angeordneten Optikelementen (19) umfaßt, wobei das Strahlenbündel (26) auf die Mikrooptik (3) trifft und dadurch auf jedes Optikelement (19) die Teilstrahlen (27, 28, 29, 30) des Strahlenbündels (26) mit unterschiedlichen Winkeln treffen, so daß von jedem Optikelement (19, 33) mehrere Beleuchtungsteilstrahlen (M1, M2, M3, M4) mit unterschiedlichen Ausbreitungsrichtungen ausgehen, die zur Beleuchtung eines Objektfelds (31) eingesetzt werden können, wobei die Strahlvervielfachungseinrichtung (1) ein erstes Modul (5) enthält, das einen ersten Strahlteiler (7, 43) sowie einen ersten und einen zweiten Modularm (8, 9) mit jeweils einem Endspiegel (10, 11) aufweist, wobei der auf den Strahlteiler (7, 43) treffende Strahl (18) in einen ersten Teilstrahl (20), der in den ersten Modularm (8) eingekoppelt wird, und in einen zweiten Teilstrahl (21) aufgeteilt wird, der in den zweiten Modularm (9) eingekoppelt wird, wobei zumindest Teile der von den Endspiegeln (10, 11) zum Strahlteiler (7, 43) zurückreflektierten Teilstrahlen (21, 22) mittels des ersten Strahlteilers (7, 43) zu einem Strahlenbündel (23) in dem die Teilstrahlen (24, 25) divergieren, zusammengeführt werden, und wobei zumindest einer der beiden Endspiegel (10) eine ebene Spiegelfläche aufweist, die so angeordnet ist, daß der Einfallswinkel des entsprechenden Teilstrahls (20) ungleich 0° ist, wobei das erste Modul (5) zwei Prismen (40, 41) umfaßt, wobei ein erstes der beiden Prismen (40) mit seiner ersten Seite (H1) an einer ersten Seite (K3) des zweiten Prismas (41) anliegt und zwischen den beiden Seiten (H1, K3) eine den ersten Strahlteiler bildende Strahlteilerschicht (43) angeordnet ist, und wobei der erste Modularm (8) im ersten Prisma (40) und der zweite Modularm (9) im zweiten Prisma (41) liegt, wobei ferner ein drittes Prisma (42) vorhanden ist, das mit seiner ersten Seite (K5) an der ersten Seite (H1) des ersten Prismas (40) anliegt, wobei die erste Strahlteilerschicht (43) dazwischen angeordnet ist, und wobei das dritte Prisma (42) mit seiner zweiten Seite (K5) an einer zweiten Seite (K4) des zweiten Prismas (41) anliegt, wobei dazwischen eine zweite Strahlteilerschicht (44) angeordnet ist.

2. Beleuchtungsvorrichtung nach Anspruch 1, bei der sich die optischen Längen der beiden Modularme (8, 9) um zumindest die halbe zeitliche Kohärenzlänge des zugeführten Strahls (18) unterscheiden.

3. Beleuchtungsvorrichtung nach Anspruch 1 oder 2, bei der die Strahlvervielfachungseinrichtung (1) zumindest ein zweites Modul (6) mit einem zweiten Strahlteiler (13) sowie einem dritten und vierten Modularm (14, 15) mit jeweils einem Endspiegel (16, 17) umfaßt, wobei das vom ersten Strahlteiler (7) kommende Strahlenbündel (23) auf den zweiten Strahlteiler (13) trifft und von diesem in ein drittes Teilstrahlenbündel, das in den dritten Modularm (14) eingekoppelt wird, und ein viertes Teilstrahlenbündel aufgeteilt wird, das in den vierten Modularm (15) eingekoppelt wird, wobei zumindest Teile der von den Endspiegeln (16, 17) des dritten und vierten Modularms (14, 15) zum zweiten Strahlteiler (13) zurückreflektierten dritten und vierten Teilstrahlenbündel mittels dem zweiten Strahlteiler (13) zum Strahlenbündel. (26) vereinigt werden, das auf die Mikrooptik (3) trifft, wobei zumindest einer der beiden Endspiegel (17) des dritten und vierten Modularms (14, 15) eine ebene Spiegelfläche aufweist, die so angeordnet ist, daß der Einfallswinkel jedes der Teilstrahlen des Teilstrahlenbandels des entsprechenden Modularms (15) ungleich 0° ist.

4. Beleuchtungsvorrichtung nach Anspruch 3, bei der sich die optischen Weglängen des dritten und vierten Modularms (14, 15) um mindestens die halbe zeitliche Kohärenzlänge des zugeführten Strahls (18) unterscheiden.

5. Beleuchtungsvorrichtung nach einem der obigen Ansprüche, bei der die Optikelemente (19) der Mikrooptik (3) gleiche Optikelemente sind, wobei die Mikrooptik insbesondere als Mikrolinsenarray (3) ausgebildet ist.

6. Beleuchtungsvorrichtung nach einem der obigen Ansprüche, bei der der Abstand von benachbarten Optikelementen (19) der Mikrooptik (3) mindestens so groß ist wie die laterale Kohärenzlänge des zugeführten Strahls (18).

## Claims

1. Illumination apparatus comprising a source of radiation and a beam multiplying device (1) which splits a coherent beam (18) supplied by the source of radiation into a plurality of partial beams (20, 21) and, upon their passing paths having different optical lengths, recombines them to a ray bundle (26) in which the partial beams (27, 28, 29, 30) diverge, and further comprising micro-optics (3), which are arranged following the beam multiplying device (1) and comprise a multiplicity of optical elements (19) in a grid-like arrangement, wherein the ray bundle (26) impinges on the micro-optics (3) and thereby the partial beams (27, 28, 29, 30) of the ray bundle (26) impinge on each optical element (19) at different angles, so that each optical element (19, 33) emits several partial illumination beams (M1, M2, M3, M4) with different directions of propagation, which can be employed for illumination of an object field (31), wherein the beam multiplying device (1) includes a first module (5) comprising a first beam splitter (7, 43) as well as first and second module arms (8, 9) with one end mirror (10, 11) each, wherein the beam (18) incident on the beam splitter (7, 43) is split up into a first partial beam (20) coupled into the first module arm (8), and a second partial beam (21) coupled into the second module arm (9), wherein at least parts of the partial beams (21, 22) reflected back to the beam splitter (7, 43) by the end mirrors (10, 11) are recombined by means of the first beam splitter (7, 43) to form a ray bundle (23) in which the partial beams (24, 25) diverge, and wherein at least one of the two end mirrors (10) has a planar mirror surface, which is arranged such that the angle of incidence of the corresponding partial beam (20) does not equal 0°, wherein the first module (5) comprises two prisms (40, 41), the first side (H1) of a first one of said two prisms (40) contacting a first side (K3) of the second prism (41) and a beam splitter layer (43) forming the first beam splitter being arranged between the two sides (H1, K3), and wherein the first module arm (8) is located in the first prism (40) and the second module arm (9) is located in the second prism (41), wherein, further, a third prism (42) is present, whose first side (K5) contacts the first side (H1) of the first prism (40), wherein the first beam splitter layer (43) is arranged there-between, and wherein the second side (K5) of the third prism (42) contacts a second side (K4) of the second prism (41), with a second beam splitter layer (44) arranged there-between.

2. Illumination apparatus according to claim 1, wherein the optical lengths of the two module arms (8, 9) differ by at least half the temporal coherence length of the supplied beam (18).

3. Illumination apparatus according to claim 1 or 2, wherein the beam multiplying device (1) comprises at least a second module (6) with a second beam splitter (13) as well as third and fourth module arms (14, 15) with one end mirror (16, 17) each, wherein the ray bundle (23) coming from the first beam splitter (7) impinges on the second beam splitter (13) and is split by the latter into a third partial ray bundle coupled into the third module arm (14), and a fourth partial ray bundle coupled into the fourth module arm (15), wherein at least parts of the third and fourth partial ray bundles reflected back to the second beam splitter (13) by the end mirrors (16, 17) of the third and fourth module arms (14, 15) are recombined by means of the second beam splitter (13) to form the ray bundle (26) impinging on the micro-optics (3), wherein at least one of the two end mirrors (17) of the third and fourth module arms (14, 15) has a planar mirror surface arranged such that the angle of incidence of each of the partial beams of the partial ray bundle of the corresponding module arm (15) does not equal 0°.

4. Illumination apparatus according to claim 3, wherein the optical path lengths of the third and fourth module arms (14, 15) differ by at least half the temporal coherence length of the supplied beam (18).

5. Illumination apparatus according to any one of the above claims, wherein the optical elements (19) of the micro-optics (3) are the same optical elements, wherein the micro-optics are provided, in particular, as a microlens array (3).

6. Illumination apparatus according to any one of the above claims, wherein the distance between adjacent optical elements (19) of the micro-optics (3) is at least as great as the lateral coherence length of the supplied beam (18).

## Revendications

1. Dispositif d'éclairage avec une source de rayonnement et un dispositif démultiplicateur de rayon (1) divisant en plusieurs rayons partiels (20, 21) un rayon (18) cohérent produit partant de la source de rayonnement et regroupant ceux-ci en un faisceau de rayons (26) où les rayons partiels (27, 28, 29, 30) divergent après avoir parcouru des chemins de longueurs optiques différenciées, et avec en outre une micro-optique (3) en aval du dispositif démultiplicateur de rayon (1) comprenant une pluralité d'éléments optiques (19) disposés en trame, le faisceau de rayons (26) rencontrant la micro-optique (3) et les rayons partiels (27, 28, 29, 30) du faisceau de rayons (26) rencontrant par conséquent chaque élément optique (19) sous des angles différents, si bien que plusieurs rayons d'éclairage partiels (M1, M2, M3, M4) avec des sens de diffusion différents, pouvant être utilisés pour l'éclairage d'un champ d'objet (31), partent de chaque élément optique (19, 33), le dispositif démultiplicateur de rayon (1) contenant un premier module (5) présentant un premier séparateur de rayon (7, 43) ainsi qu'un premier et un deuxième bras de module (8, 9) avec un miroir terminal (10, 11) chacun, le rayon (18) touchant le séparateur de rayon (7, 43) étant divisé en un premier rayon partiel (20) couplé dans le premier bras de module (8) et en un deuxième rayon partiel (21) couplé dans le deuxième bras de module (9), une partie au moins des rayons partiels (21, 22) réfléchis par les miroirs terminaux (10, 11) vers le séparateur de rayon (7, 43) étant regroupés par le premier séparateur de rayon (7, 43) en un faisceau de rayons (23) où les rayons partiels (24, 25) divergent, et un au moins des deux miroirs terminaux (10) présentant une surface réflectrice plane disposée telle que l'angle d'incidence du rayon partiel (20) correspondant ne soit pas égal à 0°, le premier module (5) comportant deux prismes (40, 41), un premier prisme (40) reposant par sa première face (H1) contre une première face (K3) du deuxième prisme (41) et une couche de séparateur de rayon (43) formant le premier séparateur de rayon étant disposée entre les deux faces (H1, K3), le premier bras de module (8) étant situé dans le premier prisme (40) et le deuxième bras de module (9) étant situé dans le deuxième prisme (41), un troisième prisme (42) étant en outre prévu, reposant par sa première face (K5) contre la première face (H1) du premier prisme (40), la première couche de séparateur de rayon (43) étant disposée entre les deux, et le troisième prisme (42) reposant par sa deuxième face (K5) contre une deuxième face (K4) du deuxième prisme (41), une deuxième couche de séparateur de rayon (44) étant disposée entre les deux.

2. Dispositif d'éclairage selon la revendication 1, dans lequel les longueurs optiques des deux bras de module (8, 9) sont inégales d'au moins la moitié de la longueur de cohérence temporelle du rayon (18) produit.

3. Dispositif d'éclairage selon la revendication 1 ou 2, dans lequel le dispositif démultiplicateur de rayon (1) comprend au moins un deuxième module (6) avec un deuxième séparateur de rayon (13) ainsi qu'un troisième et un quatrième bras de module (14, 15) avec un miroir terminal (16, 17) chacun, le faisceau de rayons (23) provenant du premier séparateur de rayon (7) rencontrant le deuxième séparateur de rayon (13) et étant divisé par celui-ci en un troisième faisceau de rayons partiels couplé dans le troisième bras de module (14), et en un quatrième faisceau de rayons partiels couplé dans le quatrième bras de module (15), une partie au moins des troisième et quatrième faisceaux de rayons partiels réfléchis vers le deuxième séparateur de rayon (13) par les miroirs terminaux (16, 17) des troisième et quatrième bras de module (14, 15) étant regroupés par le deuxième séparateur de rayon (13) en un faisceau de rayons (26) rencontrant la micro-optique (3), et un au moins des deux miroirs terminaux (17) des troisième et quatrième et quatrième bras de module (14, 15) présentant une surface réflectrice plane disposée telle que l'angle d'incidence de chaque rayon partiel du faisceau de rayons partiels du bras de module (15) correspondant ne soit pas égal à 0°.

4. Dispositif d'éclairage selon la revendication 3, où les longueurs de chemins optiques des troisième et quatrième bras de module (14, 15) sont inégales d'au moins la moitié de la longueur de cohérence temporelle du rayon (18) produit.

5. Dispositif d'éclairage selon l'un des revendications précédentes, où les éléments optiques (19) de la micro-optique (3) sont des éléments optiques identiques, et où la micro-optique est notamment configurée comme réseau de microlentilles (3).

6. Dispositif d'éclairage selon l'un des revendications précédentes, où l'espacement entre des éléments optiques (19) contigus de la micro-optique (3) est au moins de grandeur équivalente à la longueur de cohérence latérale du rayon (18) produit.
